# EUROPÄISCHE PATENTSCHRIFT

(11) **EP 0 892 374 B1**
(45) Veröffentlichungstag und Bekanntmachung des Hinweises auf die Patenterteilung: **08.05.2002**
(21) Anmeldenummer: 97112151.2
(22) Anmeldetag: 16.07.1997
(51) Int. Cl.: G07F 1/00, G07F 11/62, G07F 7/00, B65G 1/137

(54) **Ausgebeautomat für Packungen**
Packet dispensing device
Distributeur de paquets

(43) Veröffentlichungstag der Anmeldung: 20.01.1999
(73) Patentinhaber: Prokent AG, 98693 Ilmenau (DE)
(72) Erfinder: Häbler, Hans-Peter, 98704 Langewiesen (DE)
(74) Vertreter: Seewald, Jürgen, Dipl.-Ing.

(56) Entgegenhaltungen:
- EP-A- 0 670 132
- EP-A- 0 700 025
- EP-A- 0 803 452
- DE-A- 4 421 067

## Beschreibung

Die Erfindung bezieht sich auf einen Ausgabeautomaten für Packungen, der zum Lagern, Auswählen und Ausgeben von Packungen, insbesondere Zigarettenpackungen, verwendet werden kann.

Automaten zur Ausgabe von Packungen sind auf vielfältige Art bekannt. Neben einfachen mechanischen Vorrichtungen zur Entnahme von Packungen durch den Kunden, sind Automaten bekannt wo in einer Speicheranordnung eine Anzahl von Packungen gelagert sind und ausgegeben werden können, wobei jedoch der Ausgabeort mit dem Lagerort meist zusammen fällt.

Gegenstand der vorliegenden Erfindung ist ein Ausgabeautomat für Packungen zur Lagerung und dem Transport einer Vielzahl von Packungen verschiedener Sorten und Größen zu verschiedenen vorgewählten Zielorten.
In bekannten Fällen ist jeweils der Platz an der Kasse eines Marktes oder in der Nähe der Kasse belegt. Dieser werbewirksame Ort kann notwendigerweise nicht sinnvoller genutzt werden, da der Verkauf von Packungen, insbesondere Zigarettenpackungen, um Diebstähle zu vermeiden, unter Aufsicht der Kassiererin erfolgen muß. Damit sinkt die erzielbare Umsatzsteigerung im Kassenbereich. Die Umrüstung - Erneuerung von Packungen - behindert den laufenden Verkaufsbetrieb, Umrüstzeiten sind lang und lassen sich nicht flexibel an den Kundenbedarf anpassen.
Aus der Literatur sind Automaten bekannt, die die oben genannten Nachteile besitzen.

Ein bekanntes Gerät nach DE 442 1067 ist an der Decke angebracht und so dimensioniert, daß eine Tagesmenge an Zigaretten für alle Kassen vorhanden ist. Zum Befüllen wird das Gerät nach unten geklappt und mittels Führungen herausgezogen. Nachteilig ist hierbei, daß bei einer großen Menge an Zigarettenpackungen eine große Masse über Kopf bewegt werden muß. Ein ähnliches System wird in US 5.215.213 beschrieben.

In EP 700 025 wird ein Verkaufsautomat beschrieben, bei dem mittels einer in x- bzw. y-Richtung beweglichen Entnahmeeinheit Packungen aus einem zentralen Warenmagazin mit 2 benachbarten Zeilen von Schächten, in denen Packungen übereinandergestapelt sind, entnommen werden und mittels Druckluft in Ausgabe-Leitungen weiterbefördert werden können. Die Verwendung einer Displayeinheit und einer Steuerung der Ausgabe von den Kassen bzw. Ausgabestellen aus, ist für eine Anordnung zur Ausgabe von Zigarettenschachteln in EP 670 132 offenbart worden. Hier findet ebenfalls die Lagerung eines Bestandes an Packungen in einem zentralen Magazinblock und eine Beförderung von Packungen über Leitungssysteme zu mehreren einzelnen Kassen bzw. Ausgabestellen statt.

Die Erfindung ist durch die Merkmale des unabhängigen Anspruchs 1 definiert. Bevorzugte Ansführungsformen ergeben sich anhand der abhängigen Ansprüche.

Gegenstand der Erfindung ist ein Ausgabeautomat für Packungen der als Lagerort aus einem Matrixblock besteht in dem die Packungen bevorratet werden, der Lagerort über spezielle Rohrleitungen mit dem entfernten Ausgabeort verbunden ist an dem die Packungen benötigt werden.

Erfindungsgemäß wird dies bei einem Ausgabeautomat obigen Typs dadurch erreicht, indem die Packungen in liegender Anordnung gestapelt werden, von hohen vertikalen Magazinschächten aufgenommen werden, die zu einem Magazinblock zusammengefaßt sind. Die jeweils unterste Packung eines ausgewählten Magazinschachtes kann durch eine Aufnahmeeinheit herausgezogen werden und zu verschiedenen Ausgabestationen befördert werden. Jede Ausgabestation ist durch Rohrleitungen einem Ausgabeplatz als Zielort zugeordnet. Durch Einblasen der Packung mittels Luftdüse in eine zuvor ausgewählte Rohrleitung, worin sie durch weitere Luftdüsen, die in entsprechenden Abständen entlang der Rohrleitung angebracht sind, transportiert werden, durch die Transportbewegung der Packung wird jeweils die antreibende Düse ein- und ausgeschaltet bis die Packung den ausgewählten Zielort erreicht. Die Rohrleitungen können in beleibiger Streckenführung und Länge montiert sein. Die Düsen im Verlauf der Rohrleitungen sind injektorartig unter einem bestimmten Winkel angeordnet.

Ein erfindungsgemäßer Ausgabeautomat weist verschiedene Vorteile auf. Aufgrund der Lagerung der Packungen in einem Matrixblock, in Verbindung mit einer Steuerung und einem Mehrkoordinatenantriebssystem ist ein einfacher Betrieb für die Auswahl von Packungen und Transport mittels Luftdruck in einzelnen Transportkanälen an den Ausgabeort möglich, wobei eine Veränderung der Lernparameter leicht möglich ist.
Der besondere Vorteil des Ausgabeautomaten ist die Trennung des Lagerortes der Packungen vom Ausgabeort der Packungen und die Trennung der Dateneingabe, zur Anforderung der gewünschten Packungen, vom Ausgabeort und vom Lagerort durch Verwendung eines speziellen Bedien-Tableau mit Drucker zur Ausgabe eines Transaktions-Bon. Zusätzliche Vorteile liegen in der Möglichkeit einer nutzerorientierten Parametrisierung aller Systemkomponenten und die lückenlose Integration des Warenausgabeautomaten ins Warenwirtschaftssystem.

Im folgenden wird die Erfindung anhand eines Beispiels und mit Bezug auf die beiliegenden Zeichnungen näher erläutert:

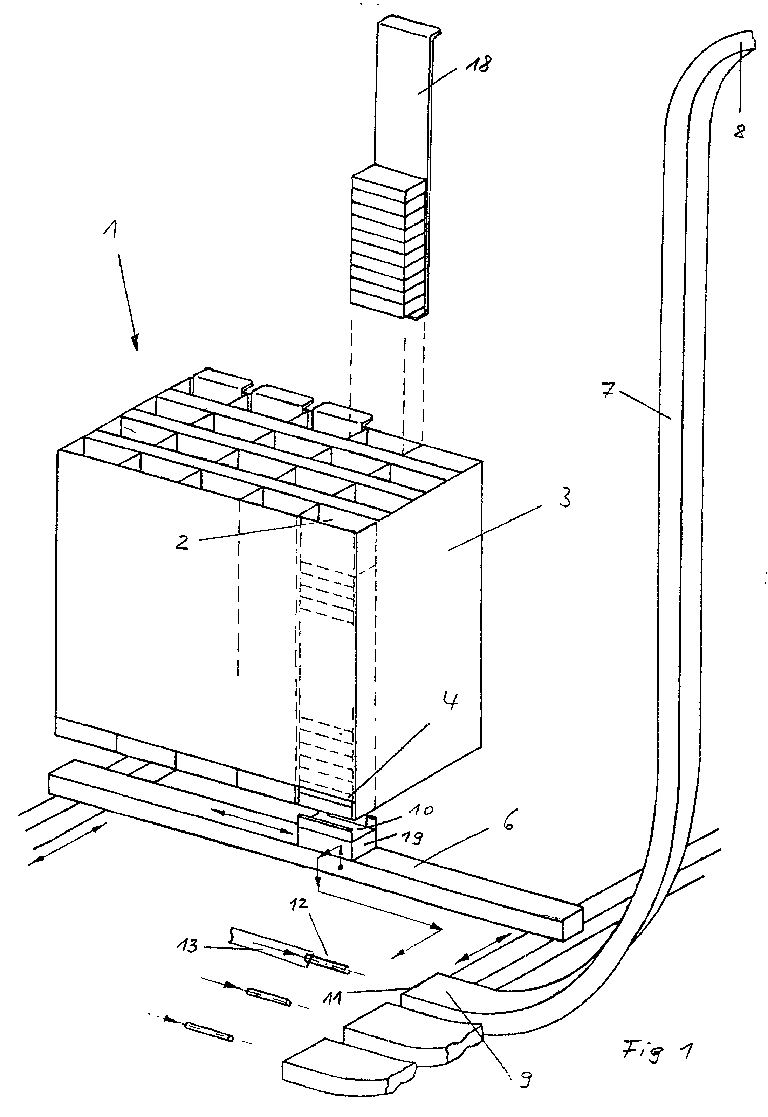

Abbildung 1 zeigt den Aufbau des Augabeautomaten.

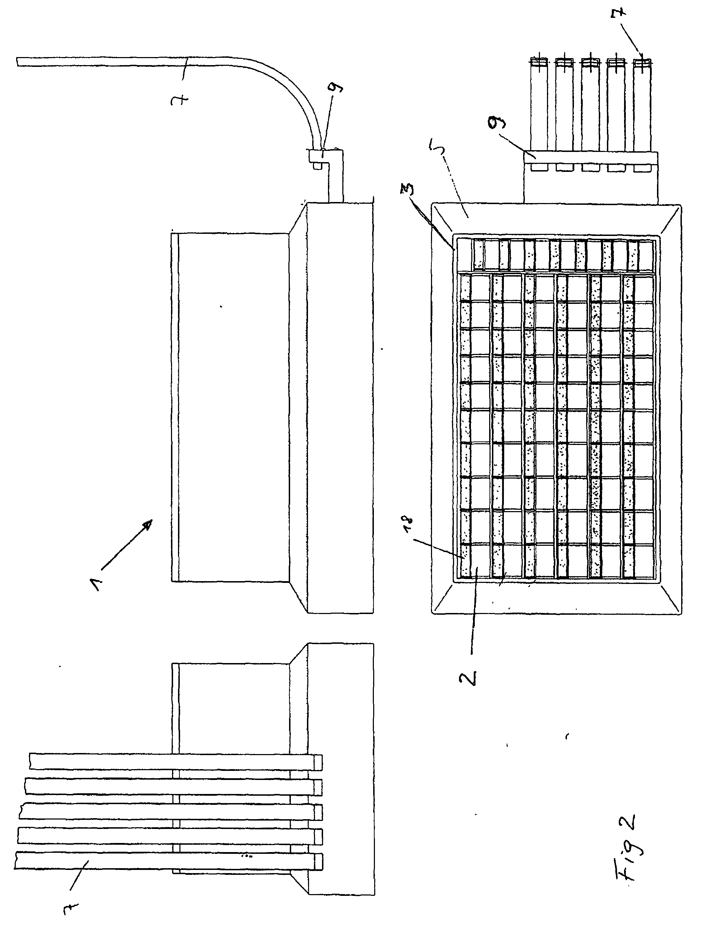

Abbildung 2 zeigt eine Darstellung in drei Ansichten des Ausgabeautomaten.
Abbildungen 3 und 4 zeigen die Einzelheiten der Aufnahmeeinheit 10 für Packungen 4.
Abbildung 5 stellt eine Ausführung von Steigleitungen 7 der Ausgabeschächte dar.
Abbildung 6 zeigt die Anordnung von einem oder mehreren Zwischenspeichern 29 am kassenseitigen Ausgaberohr 28.
Abbildung 7 zeigt eine Ausführung des Zwischenspeichers als rotierendes Fachaufnahmesystem 30.
Abbildung 8 stellt den Aufbau des Ausgabeautomaten zur Ausgabe der zu transportierenden Packung dar.
Abbildung 9 zeigt eine schematische Darstellung der Verbindungen zur Datenkommunikation.
Abbildung 10 zeigt ein Tableau 37 zur Steuerung der Ausgabe von Packungen 4.
Abbildung 11 zeigt einen Transaktions-Bon 41.
Abbildung 12 zeigt ein weiteres Ausführungsbeispiel für ein Tableau 37 mit einem Abrißblock 45.
Abbildung 13 zeigt eine Einzelheit eines Abrißblocks 45.

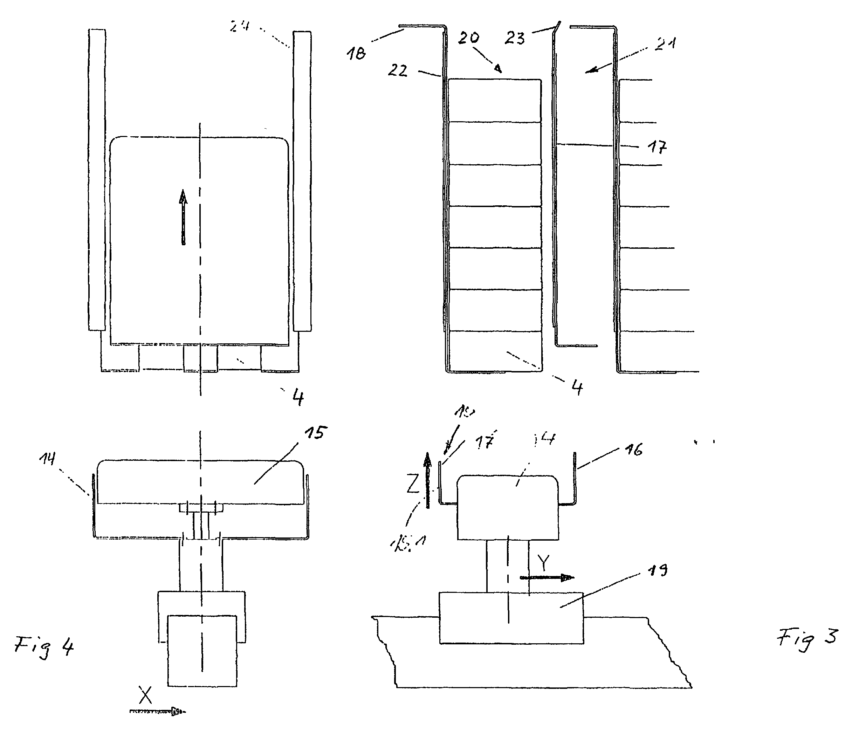

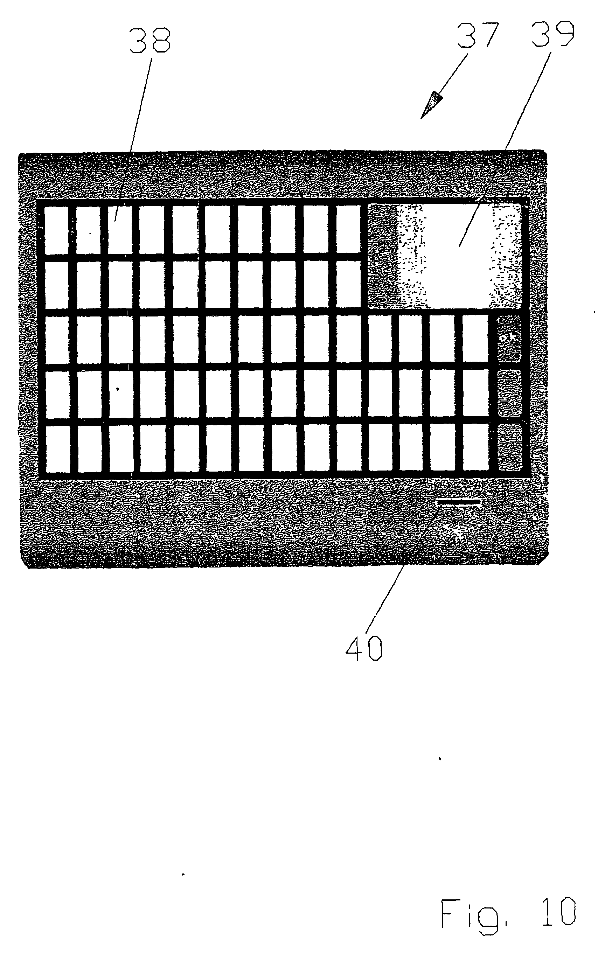

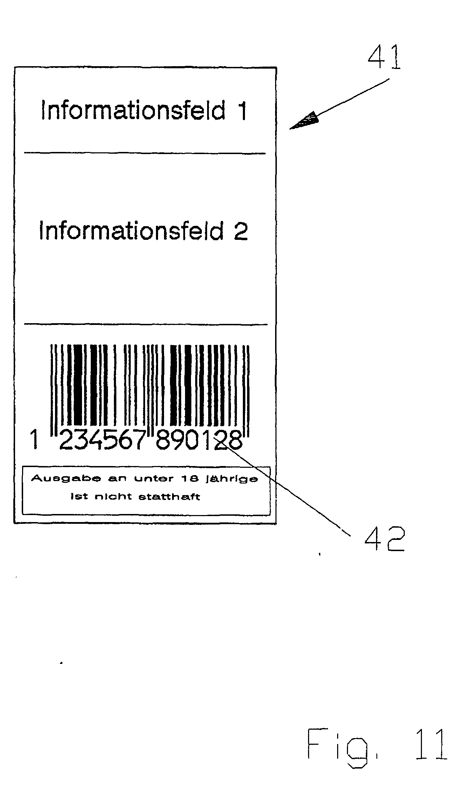

Die Abbildungen zeigen einen Ausgabeautomat für Packungen 1, bestehend aus einer Anzahl von Magazinschächten 2, die in Form eines Magazinblocks 3 mit m-Zeilen und n-Spalten angeordnet sind, in den Magazinschächten 2 sind Packungen 4 übereinander gestapelt angeordnet, der Magazinblock 3 wird durch ein Gestell 5 gehalten, unter dem Magazinblock 3 ist ein Mehrkoordinatenantrieb 6 angeordnet, sowie an einer Seite des Magazinblocks 3 Kanäle als Steigleitung 7 und als Ausgabeleitung 8 in Form einer Abnahmestation 9 vorhanden ist, eine Aufnahmeeinheit 10 für Packungen 4 ist am Mehrkoordinatenantrieb 6 angeordnet, mit deren Hilfe und durch die X-, Y-Bewegung des Mehrkoordinatenantriebes 6 können Packungen 4 aus dem Magazinblock 3 entnommen werden, der gesamte Magazinblock 3 in dem Aufnahmegestell 5 ist so angeordnet, daß der Magazinblock 3 zur Befüllung der Aufnahmeschächte 2 um einen Drehpunkt klappbar ist, die Aufnahmeeinheit 10 mittels Mehrkoordinatenantrieb 6 an eine Abnahmestation 9 bewegt werden kann, die Abnahmestation 9 ist so beschaffen, daß vor der jeweiligen Rohröffnung 11 eine Injektordüse 12 angeordent ist, die Injektordüse 12 mit einer Versorgungsdruckleitung 13 verbunden ist und mittels aus der Injektordüse 12 austretendem Gasstrahl, insbesondere Luftstrahl, die in der zuvor positionierten Aufnahmeeinheit 10 befindliche Packung 4 in das Rohrsystem 7 transportiert wird. Abbildung 3 und Abbildung 4 zeigen die Einzelheiten der Aufnahmeeinheit 10 für Packungen 4, die auf dem Mehrkoordinatenantrieb 6 ist, wonach eine Hubbewegung der Aufnahmeeinheit 10 in Z-Richtung mit je einem Linearantriebssystem 19 erfolgen kann, die Aufnahmeeinheit 10 für Packungen 4 besteht aus einem in Z-Richtung feststehenden Geländerwinkel 14 und dem in Z-Richtung beweglichen Aufnamewinkel 15, wobei der Aufnahmewinkel 15 sich aufwärts in Z-Richtung bewegt und die ausgewählte Packung 4 umschließt, wobei durch Lage des Schenkels 16 die Fallklappe 17 nach oben bewegt wird, so daß die Packung 4 in Y-Richtung einen Ausgang aus der Aufnameposition findet, der Schenkel 17 als Gegenstück zum Einsatz 18 kammartig geschlitzt ist, so daß er bei einer eingeleiteten Y-Bewegung eine Packung 4 aus dem Magazinschacht 2 herausschiebt und die Packung 4 auf der Aufnahmeeinheit 10 zu liegen kommt, nach erfolgtem Rückhub des linearen Antriebssystems 19 in negative Z-Richtung die Packung 4 durch den Geländerwinkel 14 wieder voll in der Lage gegen Verrutschung in X- und Y-Richtung in der Aufnahmeeinheit 10 gesichert ist. Jeder Magazinschacht 2 besteht aus einem Nutzschacht 20 und einem Leerschacht 21, die Wandungen jedes Nutzschachtes 20 bestehen jeweils aus der Platte 22, der Platte 23 und der Platte 24 die so angeordnet sind, daß die bevorrateten Packungen 4 in den Einsätzen 24 zuvor in den Nutzschacht 20 eingeführt waren, so daß die unterste Packung 4 in reproduzierbarer Höhe zu liegen kommt, wobei der am unteren Ende angeordnete Einsatz 18 kammartig geschlitzt ist und die auf der gegenüber liegenden Seite angeordnete Fallklappe 17 das ungewollte Herausrutschen der untersten Packung 4 verhindert. Abbildung 4 zeigt die Anordnung von zwei Aufnahmeeinheiten mit unterschiedlichen geometrischen Abmessungen, zur Aufnahme von Packungen unterschiedlicher Größe, die jeweils mit einem Linearantriebssystem 19 ausgestattet sind, wobei die Linearantriebseinheiten 19 gemeinsam auf dem Mehrkoordinatenantriebssystem 6 montiert sind. Zur Erhöhung der Flexibilität und zur Erhöhung des Transportdurchsatzes können die beschriebenen Aufnahmeeinheiten über die Zahl zwei noch mehrfach vorhanden sein.

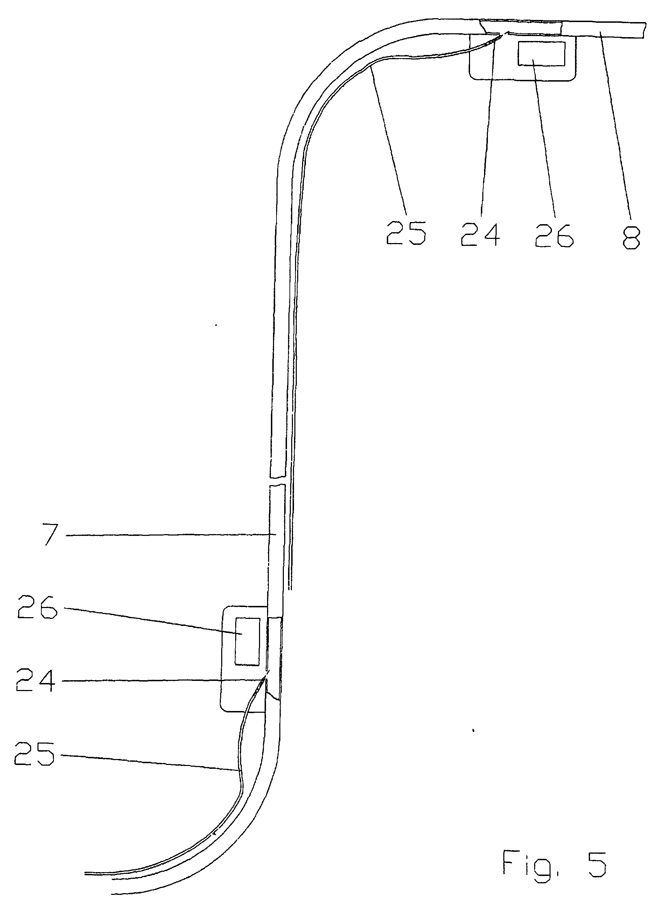

Abbildung 5 zeigt eine Ausführung von Steigleitungen 7 der Ausgabeschächte und für horizontal verlaufende Ausgabeleitungen 8 Rohre die mit rechteckigem Querschnitt ausgestattet sind, an die Injektordüsen 24, in Verbindung mit Versorgungsdruckleitungen 25, angeordnet sind, wobei durch Mehrfachanordnung von Injektordüsen 24 entlang der Ausgabeleitungen 8 mit jeweils autonomen Steuereinheiten 26, die zur Datenkommunikation untereinander über elektrische Leitungen verbunden sind, das Ausgabegut, insbesondere Packungen 4, sicher und in gewünschter Geschwindigkeit transportiert werden und jeden beliebig weit entfernten Ausgabeplatz 27 erreichen können. In den Steuereinheiten 26 sind u.a. Lichtschrankensysteme integriert die eine Steuerung der Injektordüsen 26 die bei erreichen der Transportposition einer jeweiligen Packung 4 am Einspeisepunkt der Injektordüse 24 auf der Transportstrecke 8 diese über spezielle Magnetventile an- und die vorhergende Injektordüse 24 abschaltet. Die jeweilige Injektordüse 24 ist unter einem bestimmten Neigungswinkel zur Oberfläche der Transportstrecke 8 angebracht, der Innendurchmesser der Injektordüse 24 besitzt ein bestimmtes Verhältnis zur Längsausdehnung der Injektordüse 24 und die Düseninnenwand besitzt eine besondere Formgebung.

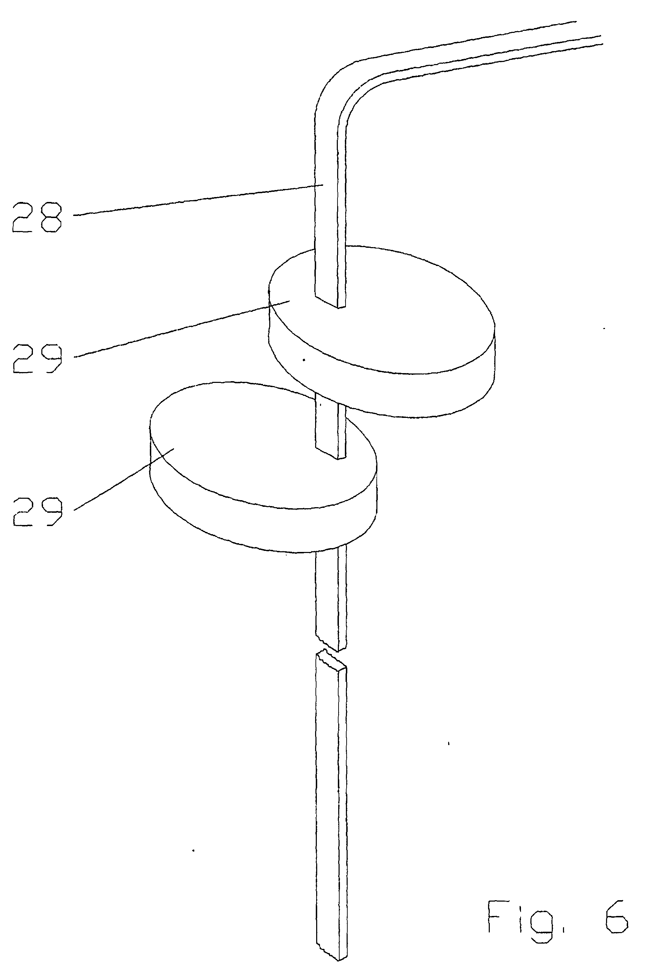

Abbildung 6 zeigt, daß am kassenseitigen Ausgaberohr 28 ein oder mehrere Zwischenspeicher 29 derart angeordnet sind, daß die zu transportierende Packung 4, insbesondere Zigarettenpackung oder Zigarettenpapierpackung, in dem Zwischenspeicher 29 abgelegt wird, in dem Zwischenspeicher 29 eine Einrichtung so enthalten ist, daß bei Bedarf ein Freigabemechanismus , der mit der Steuerung des Ausgabeautomaten verbunden ist, eine Packung 4 frei gibt, die dann im freien Fall ohne zusätzliche Antriebsmedien der Kasse 49 zugeleitet wird.

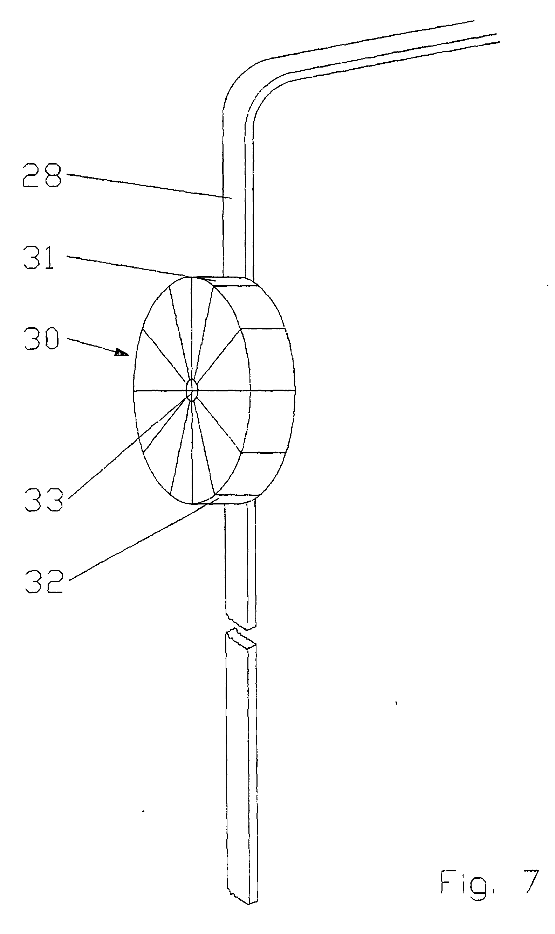

Abbildung 7 zeigt eine Ausführung des Zwischenspeichers als rotierendes Fachaufnahmesystem 30 mit Stirnbefüllungsöffnung 31 und Stirnentnahmeöffnung 32, indem die Drehachse 33 des Zwischenspeichers im rechten Winkels zur Vorzugslage des Ausgaberohres 28 angeordnet ist.

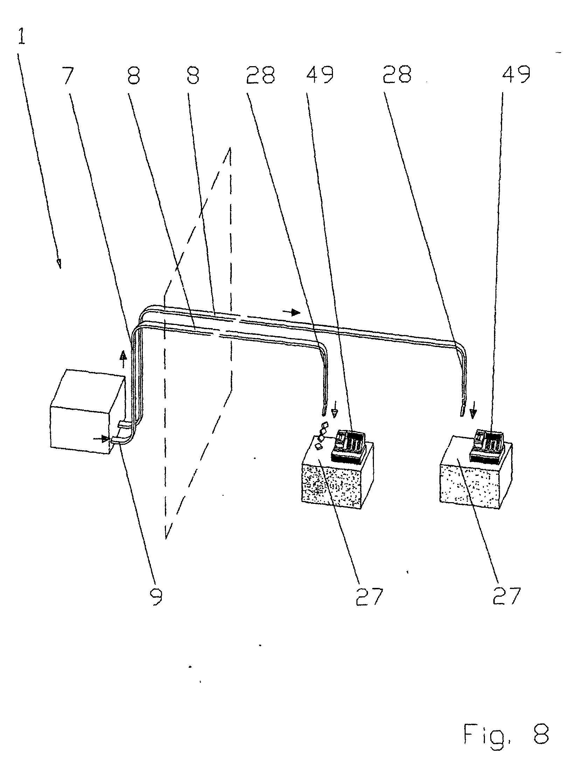

In Abbildung 8 ist der Aufbau des Ausgabeautomaten zur Ausgabe der zu transportierenden Packung 4, insbesondere Zigarettenpackung dargestellt.

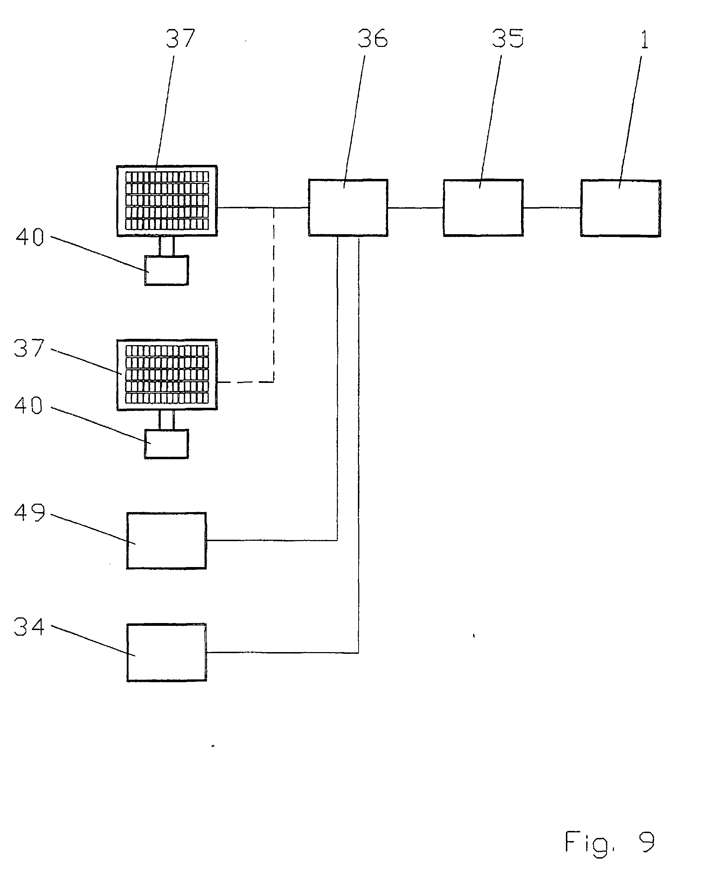

Abbildung 9 zeigt eine schematische Darstellung der Verbindungen zur Datenkommunikation. Dabei wird von einer elektronischen Kasse 49 oder von einem Kassencomputer 34 welcher zur Datenkommunikation in einem Netzwerk mit der Steuerung 35 des Ausgabeautomaten 1 verbunden ist die Bestellinformation übermittelt, wobei durch Übermittlung von Code-Wörtern, z.B. PLU-Nummer, Transaktionsnummer, an die Steuerung 35 des Ausgabeautomaten 1, die Ausgabe der gewünschten Packung 4 unmittelbar eingeleitet wird, das Computersystem 36, mit einem Monitorschirm für die bildliche Darstellung der Packungsarten ausgestattet ist und mit einer tastempfindlichen Einrichtung - touch screen - verbunden ist, wobei durch eine zusätzliche Spracheingabe in das Computersystem 36 die entsprechende Packung 4, insbesondere Zigarettenpackung, auf einfache Weise selektiert werden kann und zur Ausgabe an die Kasse 49 gebracht werden kann.
Die Steuerung der Ausgabe von Packungen 4 kann durch ein Tableau 37, gemäß Abbildung 10, welches mit einer Anzahl von Drucktastflächen 38, entsprechend der Anzahl der bevorrateten Packungssorten ausgestattet ist, wobei eine bildliche Darstellung der jeweiligen Packungssorte auf den Drucktastflächen 38 enthalten ist, verwirklicht ist. Zusätzlich ist in dem Tableau 37 ein Flachbildschirm 39 zur Bedienerunterstützung und Kommunikation angeordnet. In dem Tableau 37 ist ein Drucker 40 angeordnet, der nach Wahl der Packungssorte einen Transaktions-Bon 41 ausdruckt. Eine Ausführung eines Transaktions-Bons 41 ist in Abbildung 11 dargestellt, dieser Transaktions-Bon 41 enthält eine Transaktionsnummer 42.

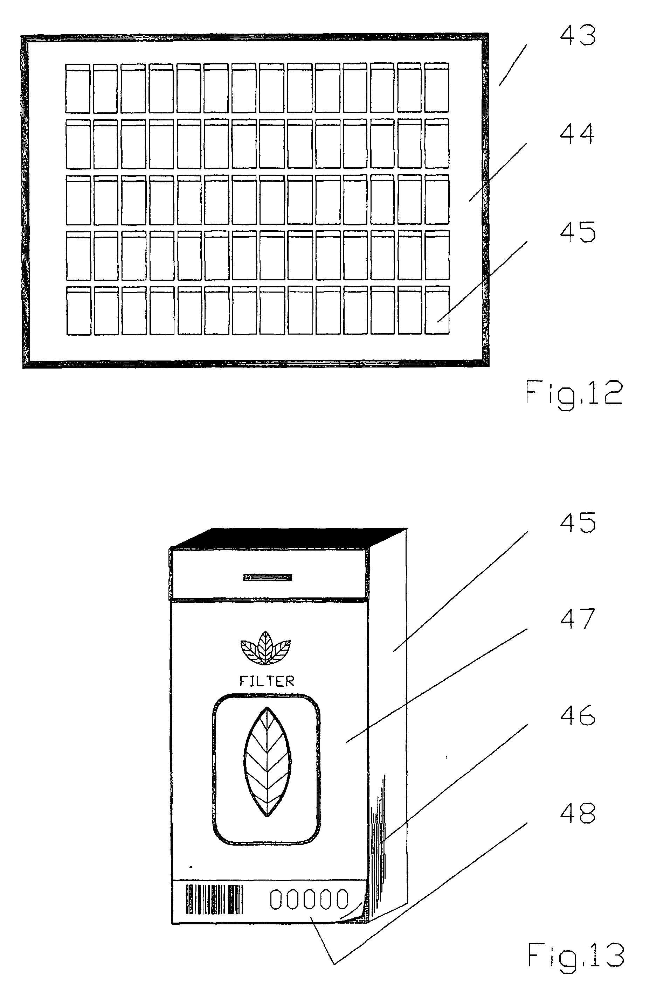

Abbildung 12 zeigt ein Tableau 43, welches derart ausgeführt ist, daß auf einer Grundplatte 44 eine Anzahl von bedruckten Abreißblöcken 45 mit einer Vielzahl von Einzelblättern 46 in Matrixform, sortiert nach Packungssorten, angeordnet sind, wobei dem einzelnem Abrißblatt 47 eine der Packungssorte äquivalente Bestimmungsnummer 48, codiert oder direkt lesbar, aufgedruckt ist, wobei die Bestimmungsnummer 48 an der Kasse 49 gelesen werden kann.
Abbildung 13 zeigt eine Einzelheit eines Abrißblocks 45 mit Einzelblättern 46 und Darstellung eines einzelnen Abrißblattes 47 mit enthaltener Bestimmungsnummer 48.

## Patentansprüche

1. Ausgabeautomat für Packungen (1) bestehend aus einer Anzahl von Magazinschächten (2), die in Form eines Magazinblocks (3) mit m-Zeilen und n-Spalten angeordnet und in denen Pakkungen (4) übereinandergestapelt sind, wobei der Magazinblock (3) durch ein Gestell (5) gehalten, unter dem Magazinblock (3) ein Antrieb (6) mit einer Aufnahmeeinheit (10) angeordnet ist, welche eine aus einem der Magazinschächte (2) entnommene Packung (4) aufnehmen kann und durch den Antrieb (6) einer Abnahmestation (9) zuführbar ist, bestehend aus an einer Seite des Magazinblocks (3) angeordneten Kanälen in Form von Steigleitungen (7) und Ausgabeleitungen (8), wobei vor jeder Kanalöffnung (11) jeweils eine mit einer Versorgungs-Druckleitung (13) verbundene Injektordüse (12) angeordnet ist, und ein aus der Injektordüse (12) austretender Gasstrahl die in der zuvor positionierten Aufnahmeeinheit (10) befindliche Packung (4) in die jeweilige Kanalöffnung (11) transportiert, **dadurch gekennzeichnet, daß** der Antrieb (6) ein x-y-Koordinatenantrieb in einer Ebene parallel zur Unterseite des Magazinblocks (3) ist, und die Aufnahmeeinheit (10) über einen Linearantrieb (19) eine zusätzliche Hubbewegung in z-Richtung ausführen kann, so daß sie in die Lagerebene der untersten Packungen (4) der Magazinschächte (2) einfahrbar ist und durch Ansteuerung des Antriebs (6) eine Packung (4) aus einem Magazinschacht (2) herausschieben und aufnehmen kann.

2. Ausgabeautomat für Packungen gemäß Anspruch 1, **dadurch gekennzeichnet, daß** jeder Magazinschacht (2) aus einem Nutzschacht (20) und einem Leerschacht (21) besteht, wobei die Wandungen jedes Nutzschachtes (20) aus einer Vorderwand (22), einer Rückwand (23) und einer Seitenwand (24) gebildet sind und an der Vorderwand (22) ein herausnehmbarer Einsatz (18) so angeordnet ist, daß die unterste Packung (4) in reproduzierbarer Höhe im Nutzschacht (20) zu liegen kommt, wobei der Einsatz (18) an seinem unteren Ende geschlitzt ist und eine an der Rückwand (23) des Nutzschachtes (20) angeordnete Fallklappe (17) ein ungewolltes Herausrutschen der untersten Packung in y-Richtung aus dem Nutzschacht (20) verhindert.

3. Ausgabeautomat für Packungen nach Anspruch 2, **dadurch gekennzeichnet, daß** die Aufnahmeeinheit (10) einen in z-Richtung feststehenden Geländerwinkel (14) und einen in z-Richtung beweglichen Aufnahmewinkel (15) aufweist, bestehend aus einem als Gegenstück zum Einsatz (18) kammartig geschlitzten Schenkel (15.1) und einem von diesen beabstandeten Gegenwinkel (16), wobei der Aufnahmewinkel (15) durch einen positiven z-Hub des Linearantriebs (19) eine ausgewählte Packung (4) umschließt und sein Gegenwinkel (16) die Fallklappe (17) nach oben bewegt, so daß sich ein Ausgang für die Packung (4) aus dem Nutzschacht (20) in y-Richtung ergibt, und der Schenkel (15.1) bei einer durch den Antrieb (6) eingeleiteten y-Bewegung die Packung (4) aus dem Magazinschacht (2) herausschiebt und die Packung (4) auf der Aufnahmeeinheit (10) zu liegen kommt, wobei nach erfolgtem negativen z-Hub des Linearantriebs (19) die Packung (4) durch den Geländerwinkel (14) wieder voll in der Lage gegen Verrutschung in x- und y-Richtung in der Aufnahmeeinheit (10) gesichert ist.

4. Ausgabeautomat für Packungen, gemäß einem der genannten Ansprüche, **dadurch gekennzeichnet, daß** für Steigleitungen (7) der Ausgabeschächte und für horizontal verlaufende Ausgabeleitungnen (8) Rohre mit rechteckigem Querschnitt verwendet werden, an die Injektordüsen (24), in Verbindung mit Versorgungsdruckleitungen (25), angeordnet sind, wobei durch Mehrfachanordnung von Injektordüsen (24) entlang der Ausgabeleitungen (8) mit jeweils autonomen Steuereinheiten (26), die zur Datenkommunikation untereinander über elektrische Leitungen verbunden sind, das Ausgabegut, insbesondere Packungen (4), sicher und in gewünschter Geschwindigkeit transportiert werden und jeden beliebig weit entfernten Ausgabeplatz (27) erreichen können.

5. Ausgabeautomat für Packungen, gemäß einem der genannten Ansprüche, **dadurch gekennzeichnet, daß** am kassenseitigen Ausgaberohr (28) ein oder mehrere Zwischenspeicher (29) derart angeordnet sind, daß die zu transportiernde Packung (4), insbesondere Zigarettenpackung oder Zigarettenpapierpackung, in dem Zwischenspeicher (29) abgelegt wird, in dem Zwischenspeicher (29) eine Einrichtung so angeordnet ist, daß bei Bedarf ein Freigabemechanismus , der mit der Steuerung des Ausgabeautomaten verbunden ist, eine Packung (4) frei gibt, die dann im freien Fall ohne zusätzliche Antriebsmedien der Kasse (49) zugeleitet wird.

6. Ausgabeautomat für Packungen, gemäß Anspruch 5, **dadurch gekennzeichnet, daß** der Zwischenspeicher als rotierendes Fachaufnahmesystem (30) mit Stirnbefüllungsöffnung (31) und Stirnentnahmeöffnung (32) ausgeführt ist, indem die Drehachse (33) im rechten Winkel zur Vorzugslage des Ausgaberohres (28) angeordnet ist.

7. Ausgabeautomat für Packungen, gemäß einem der genannten Ansprüche, **dadurch gekennzeichnet, daß** die Ausgabe der zu transportierenden Packung (4), insbesondere Zigarettenpackung, von einer elektronischen Kasse (49) oder von einem Kassencomputer (34) welcher zur Datenkommunikation in einem Netzwerk mit der Steuerung (35) des Ausgabeautomaten (1) verbunden ist , wobei durch Übermittlung von Code-Wortern, z.B. PLU-Nummer, Transaktionsnummer, an die Steuerung (35) des Ausgabeautomaten (1), die Ausgabe der gewünschten Packung (4) unmittelbar eingeleitet wird, das Computersystem (36), mit einem Monitorschirm für die bildliche Darstellung der Packungsarten ausgestattet ist und mit einer tastempfindlichen Einrichtung - touch screen - verbunden ist, wobei durch eine zusätzliche Spracheingabe in das Computersystem (36) die entsprechende Packung (4), insbesondere Zigarettenpackung, selektiert werden kann und zur Ausgabe an die Kasse (49) angefordert werden kann.

8. Ausgabeautomat für Packungen, gemäß einem der genannten Ansprüche, **dadurch gekennzeichnet, daß** die Steuerung der Ausgabe von Packungen (4) durch ein Tableau (37) mit einer Anzahl von Drucktastflächen (38), entsprechend der Anzahl der bevorrateten Packungssorten, wobei eine bildliche Darstellung der jeweiligen Packungssorte auf den Drucktastflächen (38) enthalten ist, verwirklicht ist, wobei zusätzlich in dem Tableau (37) ein Flachbildschirm (39) zur Kommunikation angeordnet ist, in dem Tableau (37) ein Drucker (40) angeordnet ist, der nach Wahl der Packungssorte einen Transaktions-Bon (41), der eine Transaktionsnummer (42) enthält, ausgedruckt werden kann.

9. Ausgabeautomat für Packungen nach Anspruch 7, **dadurch gekennzeichnet, daß** ein Tableau (43) derart ausgeführt ist, daß auf einer Grundplatte (44) eine Anzahl von bedruckten Abreißblöcken (45) mit einer Vielzahl von Einzelblättern (46) in Matrixform, sortiert nach Packungssorten, angeordnet sind, wobei dem einzelnem Abrißblatt (47) eine der Packungssorte äquivalente Bestimmungsnummer (48), codiert oder direkt lesbar, aufgedruckt ist, wobei die Bestimmungsnummer (48) an der Kasse (49) gelesen werden kann.

## Claims

1. Dispenser for packs (1), consisting of a number of storage hoppers (2), which are arranged in the form of a storage block (3) with m rows and n columns and in which packs (4) are stacked on top of one another, the storage block (3) being held by a frame (5), a drive (6) with a pick-up unit (10) being arranged below the storage block (3), which pick-up unit (10) is able to pick up a pack (4) removed from one of the storage hoppers (2) and can be fed by the drive (6) to a take-off station (9), consisting of channels arranged on one side of the storage block (3), in the form of risers (7) and dispensing lines (8), an injector nozzle (12) connected to a feed pressure line (13) being arranged in front of each channel orifice (11), and a gas jet, issuing from the injector nozzle (12), which transports the pack (4) located in the previously positioned pick-up unit (10) into the relevant channel orifice (11), **characterised in that** the drive (6) is an x-y coordinate drive in a plane parallel to the bottom of the storage block (3) and the pick-up unit (10) is able to execute an additional lifting movement in the z-direction via a linear drive (19), so that it can be driven into the storage plane of the bottom packs (4) in the storage hoppers (2) and, by controlling the drive (6), is able to push a pack (4) out of a storage hopper (2) and pick up this pack.

2. Dispenser for packs according to Claim 1, **characterised in that** each storage hopper (2) consists of a working hopper (20) and an empty hopper (21), the walls of each working hopper (20) being formed by a front wall (22), a back wall (23) and a side wall (24) and a removable insert (18) being so arranged on the front wall (22) that the bottom pack (4) comes to lie at a reproducible height in the working hopper (20), the insert (18) being slit at its bottom end and a drop-down flap (17) arranged on the back wall (23) of the working hopper (20) preventing undesired slipping of the bottom pack out of the working hopper (20) in the y-direction.

3. Dispenser for packs according to Claim 2, **characterised in that** the pick-up unit (10) has a railing angle piece (14) fixed in the z-direction and a pick-up angle piece (15) movable in the z-direction, consisting of a limb (15.1) slit in a comb-like manner as counterpart to the insert (18), and a counterpart angle piece (16) some distance away from said limb, the pick-up angle piece (15) enclosing a selected pack (4) as a result of a positive z-lift of the linear drive (19) and its counterpart angle piece (16) moving the drop-down flap (17) upwards so that an outlet for the pack (4) from the working hopper (20) results in the y-direction, and the limb (15.1) pushes the pack (4) out of the storage hopper (2) during a y-movement initiated by the drive (6) and the pack (4) comes to lie on the pick-up unit (10), the pack (4) again being fully secured in the anti-slip position in the x- and y- directions by the railing angle piece (14) in the pick-up unit (10) after the linear drive (19) has completed a negative z-lift.

4. Dispenser for packs, according to one of the said claims, **characterised in that** tubes of rectangular cross-section are used for risers (7) of the dispensing hoppers and for dispensing lines (8) running horizontally, on which tubes of rectangular cross-section injector nozzles (24), in communication with feed pressure lines (25), are arranged, the goods for dispensing, in particular packs (4), being transported reliably and at the desired speed and being able to reach any desired dispensing location (27) a long way away by means of multiple arrangement of injector nozzles (24) along the dispensing lines (8), each with autonomous control units (26), which are connected to one another via electrical leads for data communication.

5. Dispenser for packs, according to one of the said claims, **characterised in that** one or more intermediate stores (29) are arranged on the dispensing tube (28) on the checkout side in such a way that the pack (4), in particular cigarette pack or cigarette paper pack, to be transported is deposited in the intermediate store (29), a device is so arranged in the intermediate store (29) that a release mechanism, that is connected to the control for the dispenser, releases a pack (4) when required, which pack is then fed in free fall without additional drive media to the checkout (49).

6. Dispenser for packs, according to Claim 5, **characterised in that** the intermediate store is constructed as a rotary compartmentalised pick-up system (30) with end face fill opening (31) and end face removal opening (32), in which the axis of rotation (33) is arranged at a right angle to the preferred position of the dispensing tube (28).

7. Dispenser for packs, according to one of the said claims, **characterised in that** dispensing of the pack (4), in particular cigarette pack, to be transported [lacuna] by an electronic checkout (49) or by a checkout computer (34) which is connected to the control (35) of the dispenser (1) in a network for data communication, dispensing of the desired pack (4) being initiated directly by transmission of code words, for example PLU number, transaction number, to the control (35) of the dispenser (1), the computer system (36), (sic) is equipped with a monitor screen for displaying images of the pack types and is connected to a touch-sensitive device - touch screen - , it being possible by means of an additional speech input to the computer system (36) to select the relevant pack (4), in particular cigarette pack, and request its dispensing at the checkout (49).

8. Dispenser for packs, according to one of the said claims, **characterised in that** the control for the dispensing of packs (4) is implemented by a panel (37) containing a number of touch-sensitive areas (38), corresponding to the number of types of pack stocked, an image of the particular type of pack being given on the touch-sensitive areas (38), a flat screen (39) additionally being arranged in the panel (37) for communication, a printer (40) being arranged in the panel (37), which printer, after selection of the pack type, can be printed (sic) out a transaction receipt (41), that contains a transaction number (42).

9. Dispenser for packs according to Claim 7, **characterised in that** a panel (43) is constructed in such a way that a number of printed tear-off blocks (45) containing a multiplicity of individual sheets (46) in matrix form, sorted according to pack types, are arranged on a baseplate (44), a specification number (48), which is equivalent to the pack type and is coded or directly readable, being printed on the individual tear-off sheet (47), it being possible for the specification number (48) to be read at the checkout (49).

## Revendications

1. Distributeur automatique de paquets (1) comportant plusieurs réservoirs servant de magasins (2) disposés en forme de bloc de magasins (3) avec des lignes m et des colonnes n, dans lesquels des paquets (4) sont superposés, le bloc de magasins (3) étant porté par un bâti (5), un entraînement (6) étant disposé sous le bloc de magasins (3), entraînement qui comporte une unité de réception (10) pouvant recevoir un paquet (4) prélevé dans un des réservoirs de magasin (2) et pouvant être amenée, au moyen de l'entraînement (6), à un poste de réception (9) comportant des canaux en forme de conduits ascendants (7) et de conduits de distribution (8) disposés sur un côté du bloc de magasins (3), devant chacune des ouvertures de canal (11) étant disposée une buse d'injection (12) reliée à une conduite d'alimentation (13), un jet de gaz sortant de la buse d'injection (12) transportant le paquet (4) qui se trouve dans l'unité de réception (10) préalablement positionnée dans l'ouverture de canal (11) respective, **caractérisé en ce que** l'entraînement (6) est un entraînement par coordonnées x-y, sur un plan parallèle à la face inférieure d'un bloc de magasins (3), et que l'unité de réception (10) peut effectuer un mouvement de levage supplémentaire dans la direction z par l'intermédiaire d'un entraînement linéaire (19), de manière qu'elle se déplace sur le plan de stockage des paquets (4) les plus bas dans les réservoirs de magasin (2), et pousser un paquet (4) hors d'un réservoir de magasin (2) et le recevoir en activant l'entraînement (6).

2. Distributeur automatique de paquets suivant la revendication 1, **caractérisé en ce que** chaque réservoir de magasin (2) est divisé en un réservoir utile (20) et un réservoir vide (21), les parois de chaque réservoir utile (20) étant formées par une paroi avant (22), une paroi arrière (23) et une paroi latérale (24) et, **en ce qu'**un insert amovible (18) est disposé sur la paroi avant (22), de façon que le paquet le plus bas (4) vienne se poser à une hauteur reproductible dans le réservoir utile (20), l'insert (18) étant entaillé à son extrémité inférieure, et **en ce qu'**une trappe (17), disposée sur la paroi arrière (23) du réservoir utile (20), empêche le glissement involontaire du paquet le plus bas hors du réservoir utile (20), dans la direction y.

3. Distributeur automatique de paquets suivant la revendication 2, **caractérisé en ce que** l'unité de réception (10) présente une équerre de retenue (14) stationnaire dans la direction z et une équerre de réception (15) mobile dans la direction z, qui, en tant que pendant de l'insert (18), présente une branche (15.1) entaillée à la manière d'un peigne et une équerre opposée (16), l'équerre de réception (15) entourant, par une course z positive de l'entraînement linéaire (19), un paquet sélectionné (4) et l'équerre opposée (16) déplaçant la trappe (17) vers le haut de manière à obtenir pour le paquet une sortie du réservoir utile (20) dans la direction y, et de façon que la branche (15.1) pousse le paquet (4) hors du réservoir de magasin (2) lors d'un mouvement y déclenché par l'entraînement (6), et le place sur l'unité de réception (10), où il se trouve à nouveau dans une position pleinement assurée contre le glissement dans les directions x et y, après une course z négative de l'entraînement linéaire (19).

4. Distributeur automatique de paquets suivant une des revendications ci-dessus, **caractérisé en ce que** l'on utilise pour les conduits ascendants (7) des réservoirs de distribution et pour les conduits de distribution (8) s'étendant horizontalement, des tubes à section rectangulaire, sur lesquels sont disposées des buses d'injection (24) reliées à des conduites d'alimentation (25), la disposition d'une multitude de buses d'injection (24) le long des conduits de distribution (8) avec des unités de commande (26) respectivement autonomes reliées entre elles, au moyen de lignes électriques, pour la communication de données, permettant de transporter les objets à distribuer, en particulier des paquets (4) en toute sécurité, à la vitesse voulue, et d'atteindre chaque lieu de distribution (27), quelle que soit la distance à laquelle il se trouve.

5. Distributeur automatique de paquets suivant une des revendications ci-dessus, **caractérisé en ce que**, sur le tube de distribution (28) côté caisse, sont disposés un ou plusieurs magasins intermédiaires (29) de façon que le paquet à transporter (4), en particulier, un paquet de cigarettes ou un paquet de papier à cigarettes, est déposé dans le magasin intermédiaire (29), dans lequel un dispositif est prévu de telle manière qu'en cas de besoin, un mécanisme de libération relié à la commande du distributeur automatique libère un paquet (4), qui est amené à la caisse en chute libre sans autre moyen d'entraînement (49).

6. Distributeur automatique de paquets suivant la revendication 5, **caractérisé en ce que** le magasin intermédiaire est conçu comme système de réception rotatif à compartiments (30) avec ouverture de remplissage frontale (31) et ouverture de prélèvement frontale (32) grâce à la disposition de l'axe rotatif (33) formant un angle droit avec la position préférentielle du tube de distribution (28).

7. Distributeur automatique de paquets suivant une des revendications, **caractérisé en ce que** la distribution du paquet (4) à transporter, en particulier du paquet de cigarettes, par une caisse électronique (49) ou par un ordinateur de caisse (34) relié pour la communication des données dans un réseau, à la commande (35) du distributeur automatique (1), est déclenchée directement par la transmission de mots code, par exemple, de numéros PLU ou de numéros de transaction, à la commande (35) du distributeur automatique (1), **en ce que** le système d'ordinateur (36) est équipé d'un moniteur pour la représentation graphique des types de paquets et relié à un dispositif tactile «touch screen», une entrée supplémentaire par la voix dans le système d'ordinateur (36) permettant de sélectionner le paquet correspondant (4), en particulier le paquet de cigarettes, et d'en demander la distribution à la caisse (49).

8. Distributeur automatique de paquets suivant une des revendications ci-dessus, **caractérisé en ce que** la commande de distribution de paquets (4) est obtenue grâce à un tableau (37) comportant plusieurs champs tactiles (38) correspondant à la quantité de types de paquets différents, une représentation graphique du type de paquet respectif se trouvant sur les champs tactiles (38), un écran plat (39) pour la communication étant disposé en plus dans le tableau (37), ainsi qu'une imprimante (40), qui peut imprimer un bon de transaction (41) avec un numéro de transaction (42) après la sélection du type de paquet.

9. Distributeur automatique de paquets suivant la revendication 7, **caractérisé en ce qu**'un tableau (43) est conçu de manière que, sur une plaque de base (44) sont disposés plusieurs blocs de feuilles imprimées (45) avec une multitude de feuilles individuelles (46) sous forme de matrice, triées en fonction des types de paquets, sur chaque feuille individuelle (47) étant imprimé un numéro de référence (48) équivalent au type de paquet, codé ou directement lisible, le numéro de référence (48) pouvant être lu à la caisse (49).
